# FASCICULE DE BREVET EUROPEEN

(11) **EP 2 363 649 B1**
(45) Date de publication et mention de la délivrance du brevet: **06.04.2016**
(21) Numéro de dépôt: 10014822.0
(22) Date de dépôt: 22.11.2010
(51) Int. Cl.: F24D 5/02, F24D 5/12, F24D 19/10, E04B 5/48, E04B 9/02

(54) **ÉLÉMENT DE STUCTURE POUR LA RÉGULATION DE LA TEMPÉRATURE D'UN LOCAL ET INSTALLATION DE CHAUFFAGE COMPRENANT UN TEL ÉLÉMENT**
STRUKTURELEMENT FÜR RAUMTEMPERATURREGELUNG UND HEIZUNGSANLAGE MIT EINEM SOLCHEN ELEMENTEN
STRUCTURE ELEMENT FOR ROOM TEMPERATURE REGULATION AND HEATING INSTALLATION INCLUDING SUCH AN ELEMENT

(30) Priorité: 24.11.2009 FR 0905628
(43) Date de publication de la demande: 07.09.2011
(73) Titulaire: Lefort Francheteau, 92500 Rueil Malmaison (FR)
(72) Inventeur: Pezzini, Antoine, 78630 Orgeval (FR)
(74) Mandataire: Novagraaf Technologies

(56) Documents cités:
- DE-A1- 19 805 088
- DE-A1-102008 009 553
- FR-A- 988 213

## Description

### DOMAINE TECHNIQUE DE L'INVENTION

L'invention concerne un élément de structure, une installation de régulation de la température d'un local comportant un tel élément de structure, une utilisation d'une telle installation et un procédé de construction.

### ÉTAT DE LA TECHNIQUE

Dans l'art antérieur, il existe de nombreuses technologies d'installation de chauffage.

Parmi ces technologies, il est unanimement reconnu que le chauffage par rayonnement offre un confort inégalé par rapport aux autres technologies de chauffage car la chaleur produite est homogène et uniforme dans le local à chauffer. En outre, les dispositifs de chauffage et de rafraîchissement par rayonnement sont généralement intégrés au bâti du local de sorte que cette technologie est esthétique et peu encombrante.

Les dispositifs de chauffage par rayonnement sont couramment constitués de planchers chauffants et/ou rafraîchissants. Habituellement, le plancher chauffant est soit équipé d'un câble électrique fonctionnant comme une résistance, placé sous le plancher ; soit équipé d'un réseau de tubulures permettant la circulation, en boucle fermé, d'un fluide dont la température est régulée

Toutefois, ces dispositifs ne sont pas pleinement satisfaisants. En effet, d'une part, le plancher chauffant électrique ne permet pas le rafraîchissement du local et d'autre part, le circuit d'eau présente des risques de fuite et montre une faible efficacité de rafraîchissement. En outre, ces technologies nécessitent parfois un dispositif de chauffage d'appoint et/ou leur régulation est complexe, notamment en raison de la forte inertie de ces technologies, pour s'adapter aux variations de température journalières. Par ailleurs, ces dispositifs ne participent en rien à la ventilation du bâtiment, qui doit ainsi être équipé d'un dispositif de ventilation indépendant.

Par ailleurs, il est connu des installations de chauffage constituées de tubulures de conduites d'air chaud, intégrées dans le plafond ou le plancher d'un bâtiment, et présentant une sortie débouchant dans le local à chauffer. Le chauffage du local est ainsi réalisé à la fois par la dalle sous forme de rayonnement et à un degré moindre sous forme de convection, complété par une diffusion d'air chaud dans la pièce.

Une telle installation de chauffage est notamment décrite dans la demande de brevet internationale WO 99/119882 et dans les brevets allemands DE 10 2008 009553 et DE 198 05 088.

Ainsi, cette installation permet à la fois de chauffer et de ventiler le local.

Toutefois, la régulation de la température d'ambiance reste complexe et relativement lente, car la capacité de cette installation à réagir rapidement aux variations de température d'ambiance dans le local à chauffer est restreinte. En effet, lorsque la température d'ambiance est trop froide par exemple, le débit d'air chaud circulant dans les tubulures devrait être nettement augmenté afin d'atteindre rapidement la température d'ambiance désirée. Or, le débit d'introduction d'air chaud dans le local est limité car un débit trop important induit des courants d'air gênant les utilisateurs. Aussi, dans ce cas, la régulation est lente. En effet, la régulation est un compromis entre le débit d'air à insuffler et la durée que met le système à réguler la température du local en raison de l'inertie du bâtiment.

Les installations de l'art antérieur comportent donc des inconvénients.

### OBJET DE L'INVENTION

L'invention vise à remédier à ces problèmes en proposant un élément de structure et une installation de régulation de la température d'un local comprenant un tel élément, permettant d'apporter un volume d'air hygiénique requis dans le et rapide de sorte à s'adapter aux variations des besoins en assurant le confort de l'utilisateur avec une forte proportion de rayonnement.

A cet effet, et selon un premier aspect, l'invention propose un élément de structure comprenant une plaque et un réseau de conduites d'air intégrées dans la masse de ladite plaque, lesdites conduites étant, d'une part destinées à être raccordées à au moins un collecteur d'alimentation en air pulsé et présentant, d'autre part, des bouches de sortie d'air pour diffuser l'air dans le local ; ledit élément de structure étant caractérisé en ce que le réseau de conduites comporte au moins une conduite d'un premier type et une conduite d'un second type, la conduite de premier type présentant une conductivité thermique supérieure à celle de la conduite de seconde type.

Par conséquent, l'air circulant dans les conduites de premier type échange avec une grande capacité d'échange thermique des calories avec la plaque qui va alors échanger des calories avec le local par convection et par conduction de sorte à obtenir une régulation de température confortable. Ainsi, la plaque présente une forte inertie permettant le pré conditionnement des conditions ambiantes du local.

Par ailleurs, l'air sortant des conduites de second type échange une quantité limitée de calories avec la plaque de sorte qu'en modulant le débit d'air pulsé dans ces conduites, il est possible de réguler la température dans le local de manière précise et rapide.

En outre, la plaque présente une inertie thermique importante de sorte que la régulation thermique peut être réalisée de façon discontinue et ainsi être relativement économique.

Par conséquent, l'invention propose de réguler les conditions thermiques d'un local en combinant la régulation par le rayonnement et la convection d'une plaque d'un élément de structure du local et par un double apport d'air pulsé permettant d'assurer dans le local la ventilation hygiénique et le contrôle de température.

Enfin, l'élément de structure selon l'invention contribue avantageusement à la formation du local.

Avantageusement, la conduite de premier type présente une conductivité thermique supérieure à 10 W.m⁻¹.K⁻¹, de préférence supérieure à 30 W.m⁻¹.K⁻¹, et la conduite de second type présente une conductivité inférieure à 1 W.m⁻¹.K⁻¹, de préférence inférieure à 0,5 W.m⁻¹.K⁻¹.

Dans un mode de réalisation, la conduite de premier type est réalisée en métal tel que l'acier et la conduite de second type est réalisée en matière plastique rigide, du type Polychlorure de vinyle (P.V.C), polyéthylène réticulé (P.E.R) ou poly butène (P.B) ou toutes combinaisons de ces types de conduites.

Avantageusement, la plaque est une dalle préfabriquée ou coulée sur place avec ou sans ferraillage. Ainsi, l'élément de structure peut former le plafond et/ou le plancher du local.

Selon un deuxième aspect, l'invention concerne une installation de régulation de la température d'un local comprenant un élément de structure selon le premier aspect de l'invention.

L'installation comprend au moins un circuit d'amenée de l'air comportant un collecteur d'alimentation en air pulsé raccordé aux conduites, des moyens de chauffage et de refroidissement de l'air, des moyens de ventilation de l'air.

Dans un mode de réalisation de l'invention, les moyens de chauffage et de refroidissement de l'air comportent une pompe à chaleur réversible ou tout autre mode de chauffage/rafraîchissement adapté aux basses températures (pack air-air, récupérateur double flux, boucle d'eau, détente directe ...)

D'autre part, l'installation comporte en amont et avant pénétration dans la dalle des moyens de régulation du débit d'air dans les conduites.

Avantageusement, l'installation comprend une unité de régulation connectée aux moyens de chauffage et de refroidissement et aux moyens de régulation du débit dans les conduites.

Avantageusement, l'installation comprend au moins une sonde de mesure de la température d'ambiance dans le local, une sonde de mesure de la température extérieure et une sonde de mesure de la température de l'air en aval des moyens de chauffage et/ou de refroidissement, connectées à l'unité de régulation.

Selon un troisième aspect, l'invention concerne l'utilisation d'une installation de régulation de la température d'un local de chauffage selon le deuxième aspect de l'invention, prévoyant de pulser de l'air au travers de la conduite de premier type et au travers de la conduite de second type.

En outre, on régule la température de l'air pulsé. De préférence, l'on mesure la température extérieure et la température d'ambiance dans le local et l'on régule la température de l'air pulsé en fonction de la température extérieure et de la température d'ambiance et/ou de la température de la dalle

Avantageusement, l'on régule de manière indépendante le débit de l'air pulsé dans les conduites de premier type et le débit de l'air pulsé dans les conduites de second type.

Enfin, selon un quatrième aspect, l'invention concerne un procédé de construction d'un bâtiment comprenant une étape de mise en place d'un élément de structure selon le premier aspect de l'invention.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue schématique d'un bâtiment équipé d'un élément de structure pour la régulation de la température d'un local selon l'invention ;
- la figure 2 est une vue schématique en coupe verticale d'un élément de structure selon l'invention ;
- la figure 3 est une vue schématique en coupe transversale d'un élément de structure ;
- la figure 4 est une représentation schématique en coupe verticale d'un local équipé d'une installation de régulation de la température selon l'invention ;
- la figure 5 est une représentation schématique en coupe horizontale d'un local équipé d'une installation de régulation de la température selon l'invention ;
- la figure 6 est une représentation schématique en perspective, en coupe horizontale transversale d'un local comprenant un élément de structure selon l'invention ;
- la figure 7 est une représentation schématique d'une bouche de sortie d'air ;
- La figure 8 est une courbe représentant l'évolution de températures provenant de différentes sondes en fonction de la température extérieure ;
- La figure 9 illustre la loi de commande de la température de soufflage en fonction de la température extérieure ;
- La figure 10 illustre la loi de correction de la température de soufflage en fonction de la température ambiante dans le local ; et
- La figure 11 illustre une évolution de la température extérieure en été.

### EXEMPLE DE RÉALISATION

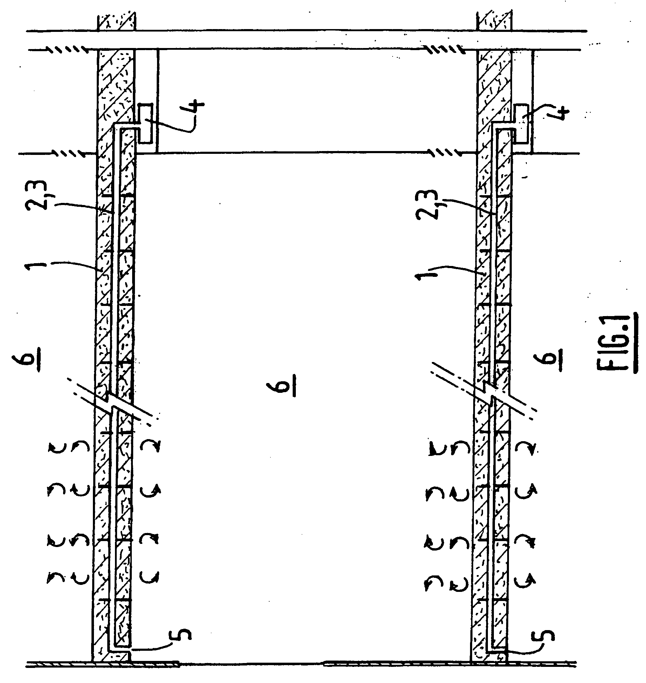

La figure 1 représente un bâtiment comprenant au moins trois étages, équipé de deux éléments de structure selon l'invention. Les éléments de structure comportent une plaque 1 rigide et un réseau de conduites d'air 2, 3 permettant de chauffer et/ou de refroidir ladite plaque rigide 1 et/ou de diffuser de l'air dans le local 6.

Dans le mode de réalisation représenté, les éléments de structure forme une dalle s'étendant entre les étages. Chaque dalle forme le plancher du local 6 situé au-dessus d'elle et le plafond du local 6 situé en dessous. Ainsi, la dalle est susceptible d'échanger des calories par rayonnement ou conduction, avec le local supérieur 6 et le local inférieur 6.

Les plaques 1 sont équipées de conduites 2, 3 d'air qui sont intégrées dans la masse desdites plaques 1. En d'autres termes, les conduites 2, 3 sont incorporées dans le bloc de la plaque 1.

Les conduites 2, 3 sont connectées, d'une part, à un collecteur 4 d'alimentation en air pulsé et présentent, d'autre part, des bouches 5 de sortie d'air pour diffuser l'air dans le local 6 afin de chauffer et/ou refroidir le local 6.

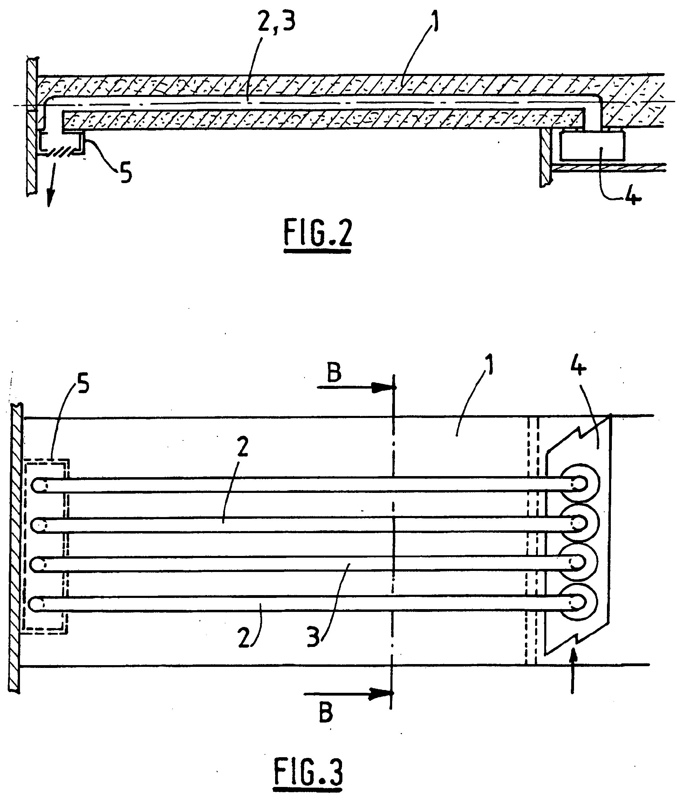

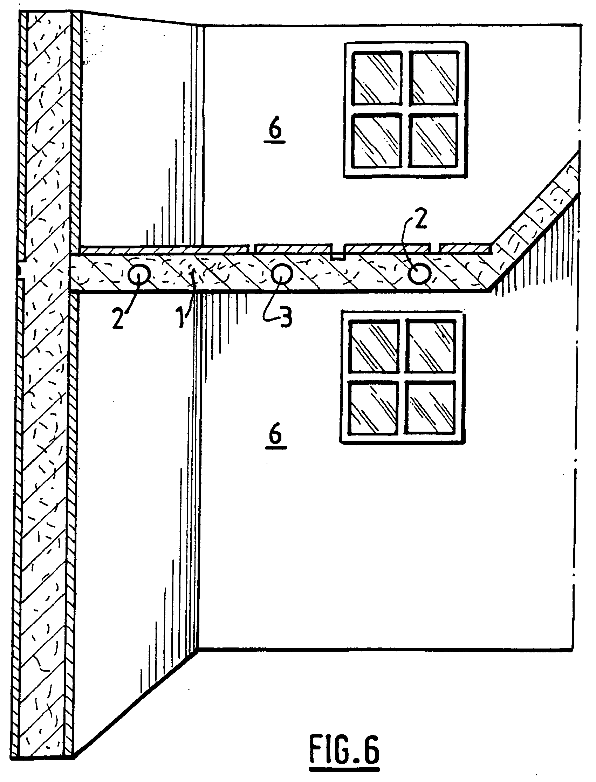

Selon l'invention, l'élément de structure est équipé de deux types de conduites 2, 3 (voir notamment les figures 3, 5 et 6).

Le premier type de conduite 2 présente une forte conductivité thermique. Typiquement, la conductivité thermique de ces conduites 2 est supérieure à 10 W.m⁻¹.K⁻¹, de préférence supérieur à 30 W.m⁻¹.K⁻¹. Par conséquent, l'air circulant dans les conduites 2 de premier type échange des calories avec la plaque 1, qui elle-même va échanger des calories avec l'air présent dans le local 6 par conduction et par convection. Puis, à la sortie des conduites 2, l'air ayant échangé une partie de ces calories est diffusé dans le local 6 afin de le chauffer ou le refroidir par convection.

Les conduites 2 de premier type pourront avantageusement être réalisées en acier. En effet, l'acier présente, en sus d'une importante conductivité thermique, une résistance accrue à la corrosion et une durée de vie élevée.

Le second type 3 de conduite présente une faible conductivité thermique. Typiquement, la conductivité thermique de ces conduites 3 est inférieure à 1 W.m⁻¹.K⁻¹, et de préférence inférieure à 0,5 W.m⁻¹.K⁻¹. Les conduites 3 de ce type pourront notamment être réalisées en matière plastique rigide, tels que le Polychlorure de vinyle (P.V.C), le polyéthylène réticulé (P.E.R), ou plus généralement tout matériau possédant des propriétés thermiques équivalentes. On notera que la plastique devra être rigide afin de supporter la pression lors du coulage de la plaque 1.

On notera également que dans un mode de réalisation de l'invention, les conduites 3 de seconde type pourront être constituées d'un tube de faible conductivité thermique, en plastique par exemple, introduit à l'intérieur d'un autre tube, en acier par exemple.

L'air circulant dans les conduites de second type 3 échange une quantité limitée de calories avec la plaque 1, de sorte que la température de l'air à la sortie des conduites 3 de second type est sensiblement identique à celle de l'air à l'entrée de ces conduites. Par conséquent, l'air en sortie des conduites 3 de second type présente une capacité d'échange thermique avec l'air du local 6 plus importante que celle de l'air sortant des conduites 2 du premier type. Ainsi, l'air sortant des conduites 3 de second type permet de réguler rapidement la température du local 6 sans pour autant que le débit d'air diffusé dans le local 6 soit trop important et nuise au confort des utilisateurs.

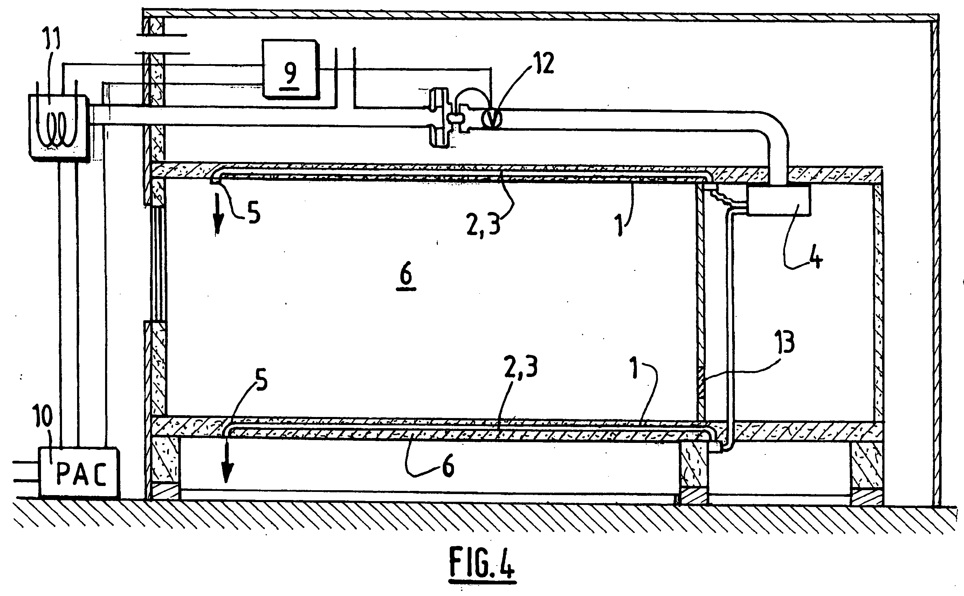

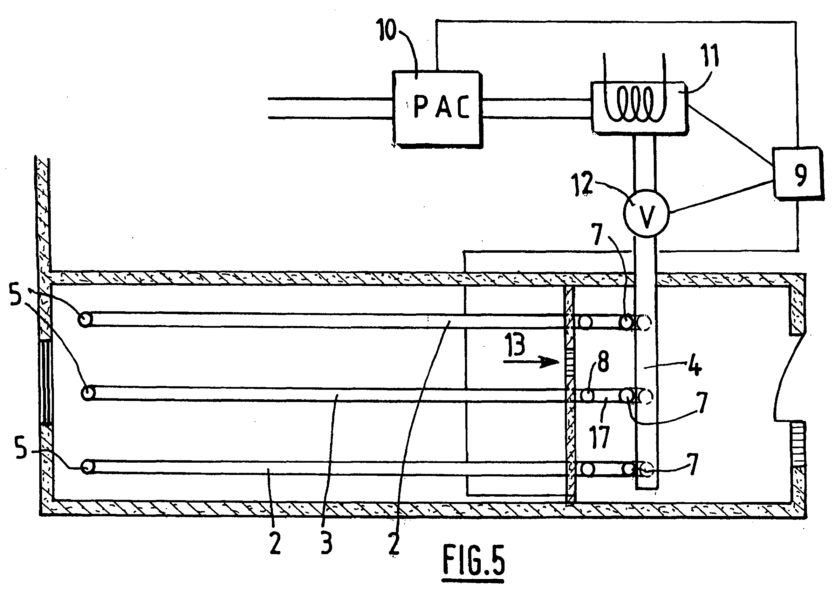

Les conduites 2, 3 d'air de la dalle présentent une première extrémité raccordée à un circuit d'amenée de l'air, représenté sur les figures 4 et 5, qui capte de l'air extérieur et l'achemine vers les conduites d'air. Dans le mode de réalisation de la figure 5, la conduite de premier type 2 est raccordée directement au collecteur 4 alors que la conduite de deuxième type 3 est raccordée au collecteur 4 via un tube de raccord 17. L'utilisation d'un tube de raccord intermédiaire 17 permet notamment de faciliter le raccordement des conduites de deuxième type 3 au collecteur 4. Le tube 17 de raccord pourra notamment être un tube d'acier.

Le circuit d'amenée d'air comporte donc un collecteur 4 d'alimentation en air raccordé aux conduites 2, 3 d'air et est équipé de moyens de ventilation 12 permettant de pulser l'air de sorte à l'amener de l'extérieur du bâtiment vers le collecteur 4. Par ailleurs, le circuit d'amenée d'air comporte des moyens 10, 11 de chauffage et/ou de refroidissement de l'air.

Dans un mode de réalisation représenté sur les figures 4 et 5, les moyens de chauffage et/ou de refroidissement comportent une pompe à chaleur réversible 10. Les pompes à chaleur (PAC) 10 présentent un rendement énergétique supérieur aux moyens de chauffage, dits « traditionnels ». En outre, les pompes à chaleur 10 réversibles présentent l'avantage de pouvoir à la fois refroidir et chauffer un flux d'air. La pompe à chaleur 10 sera par exemple une pompe à chaleur air/air réversible. Par ailleurs, dans ce mode de réalisation, les moyens de chauffage comportent également, de préférence, des moyens de chauffage d'appoint constitués d'une résistance électrique 11 ou batterie de chauffage de l'air permettant de prendre le relais de la pompe à chaleur 10 lorsque son fonctionnement est défaillant ou lorsque ses limites d'utilisation sont atteintes ; si la température extérieure se situe en deçà d'un seuil par exemple.

Dans un autre mode de réalisation, les moyens de chauffage et/ou de refroidissement et les moyens de ventilation de l'air sont intégrés dans une centrale de traitement d'air.

Par ailleurs, afin d'extraire le flux d'air du local 6, celui-ci est équipé d'une grille d'extraction 13, éventuellement munie de moyens de ventilation. Par ailleurs, on notera que les débits sont de préférence choisis de sorte à assurer un taux de renouvellement d'air dans le local de l'ordre de un volume par heure.

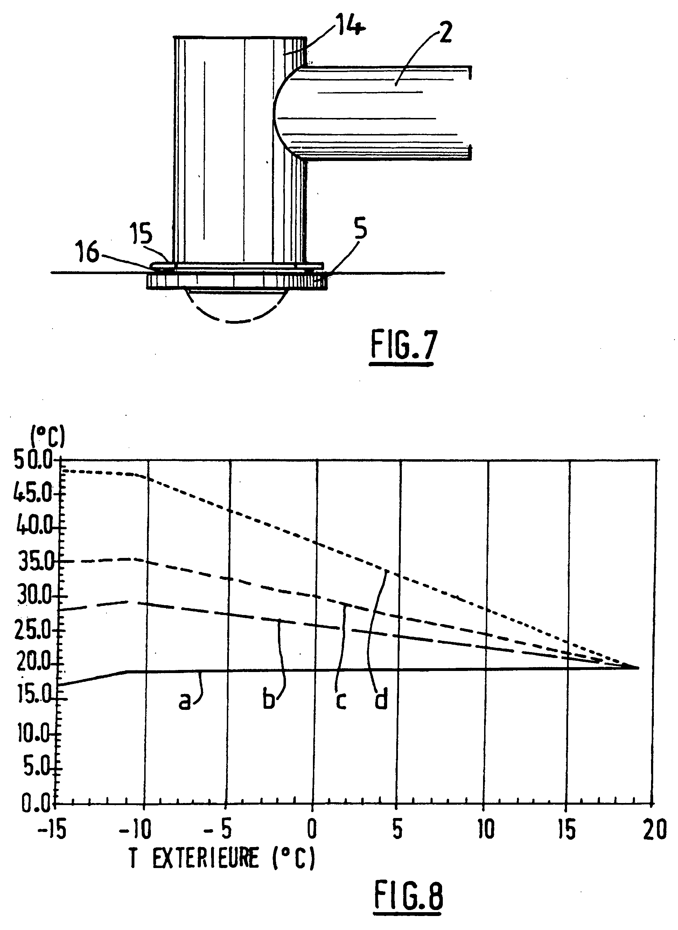

D'autre part, les conduites 2, 3 présentent à leur seconde extrémité une bouche 5 de sortie d'air. Les bouches 5 de sortie d'air permettent de diffuser l'air, ayant circulé dans les conduites, vers le local 6. Dans le mode de réalisation représenté sur la figure 7, une conduite 2 est raccordée à un tube vertical 14 perpendiculaire qui est soudé sur une virole 15. La bouche de sortie 5 est montée sur la virole 15 et un joint 16 permet d'assurer l'étanchéité entre la virole 15 et la bouche 5. Dans un autre mode de réalisation, on pourra également prévoir que la bouche 5 de sortie d'air soit constituée par un simple coude, en PVC ou en acier par exemple.

Avantageusement, la bouche de sortie 5 est orientée vers le local 6 disposé en dessous de la dalle de sorte à limiter les gênes ressenties par les utilisateurs, dues aux courants d'air.

Les conduites 2, 3 d'air sont de préférence disposées parallèlement les unes aux autres et équitablement réparties sur toute la largeur de la plaque 1 (voir figures 3 et 5). L'écartement entre les conduites est notamment fonction des diamètres des conduites, et des caractéristiques thermiques du local. L'écartement sera de préférence compris entre 5 et 200 cm. En outre, les conduites 2 , 3 sont avantageusement centrées sur la hauteur de la plaque 1 de sorte à permettre une répartition cohérente de la chaleur dans la plaque 1.

De manière avantageuse, on pourra prévoir que le rapport entre les conduites 2, 3 de premier et de second type soit d'environ deux conduites 2 de second type pour une conduite 3 du premier type tel que représenté sur la figure 5. On notera toutefois que bien que ce ratio soit valable dans la majorité des cas, il pourra être,dans certains cas, différent, notamment lorsque la dimension de la plaque 1 et/ou le nombre total de conduites à implanter dans la plaque 1 ne sont pas appropriés à l'utilisation de ce ratio.

Par ailleurs, l'installation de régulation de la température, représentée sur les figures 4 et 5, comporte également une unité de régulation 9 connectée à un ensemble de sondes de températures, non représentées. L'unité de régulation sera par exemple un automate programmable. L'ensemble de sondes comporte notamment une sonde de température d'ambiance dans le local, une sonde de température extérieure et une sonde de température de l'air pulsée, disposée en aval des moyens de chauffage et de refroidissement.

En outre, l'installation comporte des moyens de réglage d'une température de consigne, disposés dans le local 6, connectés à l'unité de régulation 9.

Les conduites 2, 3 sont avantageusement équipées de moyens de régulation du débit d'air 8 permettant de moduler le débit dans les conduites 3 de second type et dans les conduites de premier type 2.

Les moyens 8 de régulation du débit pourra notamment être un clapet ou un registre. Le moyen 8 de régulation est commandé par l'unité de régulation 9 de sorte à réguler la température d'ambiance dans le local 6 en modulant le débit d'air passant au travers de la conduite 3 de second type. En outre, la conduite 3 de second type est également équipée d'un module de régulation 7 disposé en amont du moyen de modulation 8.

On notera toutefois qu'en fonction des applications de l'installation, on pourra également prévoir qu'aucune des conduites 2, 3 ne comporte de moyens de régulations du débit, que seul les conduites 2 de premier type comportent des moyens de régulation ou que seul les conduites 3 de second type comportent des moyens de régulation

Ces dispositions permettent selon les cas de mieux favoriser le respect des réglementations relatives à la ventilation hygiénique, réguler les conditions de soufflage pour maîtriser les conditions ambiantes ou de réguler la recharge ou la décharge de la plaque.

Avantageusement, lorsque l'installation vise à réguler la température de plusieurs locaux d'un bâtiment, l'unité de régulation 9 comporte un module de régulation principal et des modules de régulation auxiliaires. Le module de régulation principal est connecté à une sonde de température extérieure, à une sonde de température de l'air pulsé à la sortie des moyens de chauffage et/ou de refroidissement 10, 11 22, 26, et à une sonde de température d'ambiance située dans une zone type du bâtiment, qui sera déterminée en fonction des caractéristiques principales du bâti. Le module de régulation principal pilote les moyens de chauffage et/ou de refroidissement 10, 11 22, 26 en fonction de lois de commande basées sur les besoins du bâtiment. Le module de régulation principal pourra notamment être un automate placé dans un coffret électrique d'alimentation de la centrale de traitement.

Par ailleurs, l'installation comporte des modules de régulation auxiliaires permettant de réguler de façon indépendante la température dans chaque local. Chaque module de régulation auxiliaire est connecté à une sonde de température d'ambiance placée dans le local considéré et pilote le(s) moyen(s) de modulation 8 du débit dans la conduite 3 de second type dudit local en fonction de la température d'ambiance mesurée et d'une température d'ambiance consigne dans le local. Dans la pratique, les modules de régulation auxiliaires pourront être intégrés dans un régulateur d'ambiance qui mesure la température d'ambiance et est raccordé électriquement à un servomoteur commandant l'ouverture du registre sur la conduite de second type. Ainsi, lorsque la température du local n'est pas optimale, le régulateur envoie un signal électrique au servomoteur, celui-ci capte l'information et procède à une action directe sur le registre.

En fonctionnement, lorsque la température d'ambiance dans le local 6 est inférieure à une température de consigne, en hiver par exemple, les moyens de chauffage chauffe l'air qui est pulsé dans les conduits 2, 3. La température de consigne de l'air pulsé est déterminée en fonction de la température extérieure et corrigée en fonction de la température d'ambiance dans le local. Dans un mode de réalisation, la température de consigne peut également être corrigée en fonction de la température de consigne dans le local.

D'une part, l'air chaud est pulsé dans les conduites 2 de premier type de sorte à chauffer la plaque 1 qui va elle-même échanger des calories avec l'air du local par conduction et rayonnement. En outre, l'air sortant des bouches 5 des conduites 2 de premier type est diffusé dans le local 6 et participe ainsi au chauffage du local. D'autre part, on module le débit d'air dans les conduites 3 de second type de sorte à réguler rapidement la température dans local 6.

Notons que la plaque 1 présente avantageusement une inertie thermique importante. C'est notamment le cas lorsque la plaque 1 est réalisée en béton. Cette inertie est extrêmement importante pour la régulation par la masse. En effet, on joue sur l'énergie contenue dans la masse de la dalle ainsi que sur la température de l'air dans les conduites 2, 3 pour obtenir la température d'ambiance souhaitée. Si la masse est trop légère, la plaque 1 ne stockera pas de calories et les moyens de chauffage 10, 11 devront fonctionner en continu et aucune économie de consommation ne pourra avoir lieu.

Ainsi, afin d'éviter les consommations d'énergie excessives, on utilise l'inertie thermique de la plaque 1 qui absorbe l'énergie superflue lorsque la pièce atteint une température d'équilibre et la restitue par rayonnement lorsque la température ambiante redescend. Une fois que le local 6 est chauffé et atteint une température d'équilibre, la chaleur en excès s'accumule dans l'élément de structure. Ainsi, les moyens de chauffage peuvent être arrêtés. Par la suite, lorsque l'air dans le local 6 se refroidit, l'élément de structure libère la chaleur emmagasinée et la restitue à l'air. Par conséquent, ce procédé évite d'utiliser en continue les moyens de chauffage 10, 11, et permet donc d'économiser de l'énergie. En outre, en utilisant ce principe, on peut maîtriser la consommation électrique de l'installation, en stockant une quantité d'énergie importante pendant les heures creuses et la restituant pendant les heures de pointe.

Bien sûr, le procédé de régulation sera d'autant plus efficace et économique que le bâtiment est isolé extérieurement ou tout du moins possède des vitrages peu déperditifs. D'autre part la régulation dépend également de l'occupation des locaux. En effet, en période d'inoccupation, on pourra prévoir de diminuer le débit d'air dans les locaux de sorte à ne laisser entrer qu'un débit hygiénique minimal, ce qui réduira par conséquent la consommation électrique des appareils auxiliaires (ventilateurs, pompe...). En période d'occupation, le moyen de modulation 8 du débit dans la conduite 3 de second type sera ouvert de façon à combattre les déperditions et à traiter la ventilation hygiénique.

De préférence, l'installation est conçue et régulée de sorte que le chauffage soit équitablement réparti (≈ 50% - 50%) entre le chauffage par rayonnement et conduction d'une part, et le chauffage par l'apport d'air pulsé d'autre part. Il en est de même pour le froid

A titre d'exemple, la figure 8 illustre l'évolution de la température moyenne du béton constituant la dalle (courbe b), de la température de l'air à la sortie des bouches 5 des conduites 2 de premier type (et pour conduite 3 second type ?, il nous semble que la température de l'air à la sortie des conduites de second type n'est pas identique à celle à la sortie des conduites de premier type) (courbe c) et de la température de l'air dans le collecteur d'alimentation (courbe d), en fonction de la température extérieure de sorte à maintenir une température d'ambiance dans un local (courbe a), pour un bâtiment donné.

Par ailleurs, lorsque la température d'ambiance est supérieure à une température de consigne, pendant la journée, en été, par exemple, on refroidit la température de l'air pulsé et l'on module le débit d'air passant dans les conduites de second type de sorte à réguler la température dans le local.

En outre, en été, lorsque la température extérieure monte au-dessus de la température de consigne dans le local 6, on réduit le débit d'un tiers par le moyen de modulation 8 dans le circuit d'alimentation en air, pendant la journée. Cette action permet de limiter de plusieurs degrés l'augmentation de la température ambiante dans le local 6 lorsque la température extérieure monte.

La nuit, lorsque la température extérieure redescend en dessous d'un certain seuil, le moyen de modulation 8 de la conduite 3 de second type est complètement ouvert de sorte à introduire un débit maximum d'air extérieur dans le local 6. Ce débit permet de rafraîchir au maximum l'élément de structure et les parois du local 6 grâce à l'air extérieur qui est plus froid que la température d'ambiance et que la température radiante des parois et de l'élément de structure. Cette opération est appelée décharge nocturne et consiste donc à rafraîchir le local 6 la nuit grâce à l'injection d'air extérieur. On parle de « décharge nocturne » du bâtiment puisqu'il évacue toute la chaleur excédentaire accumulée en journée.

Par ailleurs, la pompe à chaleur peut également être utilisée pendant la période d'été. Ainsi, si la température extérieure chute de façon importante pendant la nuit, il convient de ne pas diffuser l'air extérieur directement dans le local de sorte à éviter que les personnes présentes dans le local ne ressentent un inconfort. Dans ce cas, la pompe à chaleur sera utilisée pour réchauffer l'air extérieur destinée à être introduit dans le local pendant la nuit, lorsque l'air extérieur descend en dessous d'un seuil. A contrario, si la température extérieure demeure trop élevée pendant la nuit, alors l'opération de décharge nocturne ne sera pas suffisante. Dans ce cas, la pompe à chaleur permet de refroidir l'air extérieur nocturne lorsque sa température dépasse un seuil.

Un procédé de fabrication d'un élément de structure selon l'invention est décrit ci-dessous.

Dans ce mode de réalisation de l'invention, l'élément de structure est une dalle présentant une épaisseur comprise entre 15 et 30 cm par exemple, réalisée en béton plein armé ou pas.

À titre d'exemple, le béton utilisé présente les caractéristiques suivantes :
- Conductivité thermique : λ béton = 1.75 W.m⁻¹.K⁻¹ ;
- Chaleur spécifique : Cp béton = 0.24 W.K⁻¹.kg⁻¹ ;
- Masse surfacique : m = 350 kg.m⁻².

Le béton utilisé est un béton traditionnel fait à partir de gravier, de ciment, de sable et d'eau, auquel on rajoute les additifs appropriés. Afin de faciliter le coulage du béton, améliorer ses propriétés thermiques et/ou imperméabiliser la dalle de béton, le béton pourra comprendre un adjuvant du type hydrofuge de masse.

Les dalles pourront être préfabriquées puis transportées et posées ou directement coulées sur place afin d'éviter leur transport. On notera que la préfabrication des dalles sera particulièrement avantageuse lorsqu'il est possible d'utiliser des dalles standardisées. Pour les autres cas, on préfèrera couler les dalles sur place.

Tout d'abord, il convient de réaliser un coffrage en bois, par exemple, et de le soutenir par des étais, placés autour du coffrage, et permettant de maintenir la pression exercée lors du coulage du béton.

Par la suite, des cales de support présentant une hauteur appropriée sont réparties sur toute la périphérie du coffrage. Un treillis métallique s'étendant sur toute la surface du coffrage vient ensuite se positionner sur les cales. Le treillis métallique permet de centrer les tubes sur la hauteur de la dalle et de les répartir sur la largeur de la dalle.

Les conduites 2 de premier type sont par exemple en acier et présente un diamètre intérieur de 50 mm. Les conduites 3 de second type sont en matière plastique et présentent également un diamètre intérieur de 50 mm. Le diamètre intérieur de conduites pourra varier entre 50 et 200 mm, par exemple.

Les conduites 2 de premier type, les conduites 3 de second type et les bouches de soufflages 5 sont ensuite positionnés dans le coffrage en fonction de la largeur, de la hauteur et de la longueur de la dalle. Avantageusement, les bouches de soufflages seront placés à une distance supérieure à 20 cm de la paroi extérieure du local et raccordées aux conduites 2, 3.

Les conduites en acier sont soudées au treillis métallique. Les conduites en matière plastique ne pouvant être soudées, elles sont ligaturées sur les treillis métalliques. En outre, les cales de soutien sont soudées sur le dessous des conduites de sorte à éviter la déformation ou le soulèvement des conduites lors du coulage du béton.

Par la suite, on recouvre les conduites d'un second treillis, supérieur. Ainsi, en recouvrant de part et d'autre les conduites en acier et plastique par des treillis métalliques, on s'assure que ces dernières seront stables lors du coulage du béton.

Le plan de ferraillage sont avantageusement calculés pour maximiser la diffusion de calories dans la dalle.

Enfin, le coffrage est rempli de béton. Lorsque le béton est sec, le coffrage peut être retiré et l'élément de structure est opérationnel.

Ensuite, les conduites 2, 3 d'air sont raccordées au collecteur 4 d'alimentation en air pulsé directement ou via un raccord intermédiaire pour les conduites 3 de second type.

Pour obtenir une meilleure finition, on peut ajouter un revêtement de sol (tapis, moquette, carrelage...) tant que celui-ci n'excède pas une épaisseur trop importante.

Enfin, l'invention concerne également un procédé de fabrication d'un bâtiment dans lequel on met en place un élément de structure selon l'invention de sorte à former le plafond et/ou le plancher du local. Lorsque l'élément de structure forme le plancher du local, il assure le support du local.

L'invention est décrite dans ce qui précède à titre d'exemple. Il est entendu que l'homme du métier est à même de réaliser différentes variantes de réalisation de l'invention sans pour autant sortir du cadre de l'invention.

En particulier, on notera que l'invention ne se limite pas à des éléments de structure fabriqués en béton et l'on pourra utiliser tous matériaux appropriés présentant des caractéristiques mécaniques et thermiques semblables.

### EXEMPLE DE REALISATION

L'installation de régulation décrite ci-dessus à été testé dans un local présentant les dimensions suivantes :

| **Données** | **Valeurs** |
|---|---|
| Longueur | 6 m |
| Largeur | 2,4 m |
| Hauteur sous plafond | 2,5 m |
| Hauteur totale | 2,7 m |
| Surface Local | 14,4 m² |
| Volume Local | 36 m³ |

Le tableau ci-dessous récapitule la constitution des parois du local test et du bloc d'isolation extérieure entourant le local.

| **Parois** | **Matériau ou gaz** | **Epaisseur ou (dimension L*h) m** | **Conductivité thermique W.m⁻¹.K⁻¹** | **Masse volumique kg.m⁻³** | **Isolant thermique m** |
|---|---|---|---|---|---|
| **Parois extérieures du bloc d'isolation** | Béton | 0,15 | 1,75 | 2200 | extérieure |
| **Parois verticales du bloc d'isolation, côté porte** | Béton | 0,15 | 1,75 | 2200 | Aucun |
| **Murs verticaux du local** | Béton | 0,2 | 1,75 | 2200 | Aucun |
| **Plafond du local** | Béton | 0,1 | 1,75 | 2200 | Aucun |
| **Plancher du local** | Béton | 0,1 | 1,75 | 2200 | Aucun |
| **Fenêtre double vitrage avec menuiserie PVC** | Argon | 4-16-4 (1,2*1,53) | N/A | N/A | Aucun |
| **Porte** | Bois | (0,725*2,05) | 0,19 | 600 | Aucun |

Les parois extérieures du bloc d'isolation sont isolées extérieurement avec une couche de 10 cm de polyéthylène extrudé rigide. La conductivité thermique de cet isolant est de 0,34 W / (m.K).

Les températures extérieures (T ext) et ambiante (T amb) sont mesurées au moyen de sondes de température.

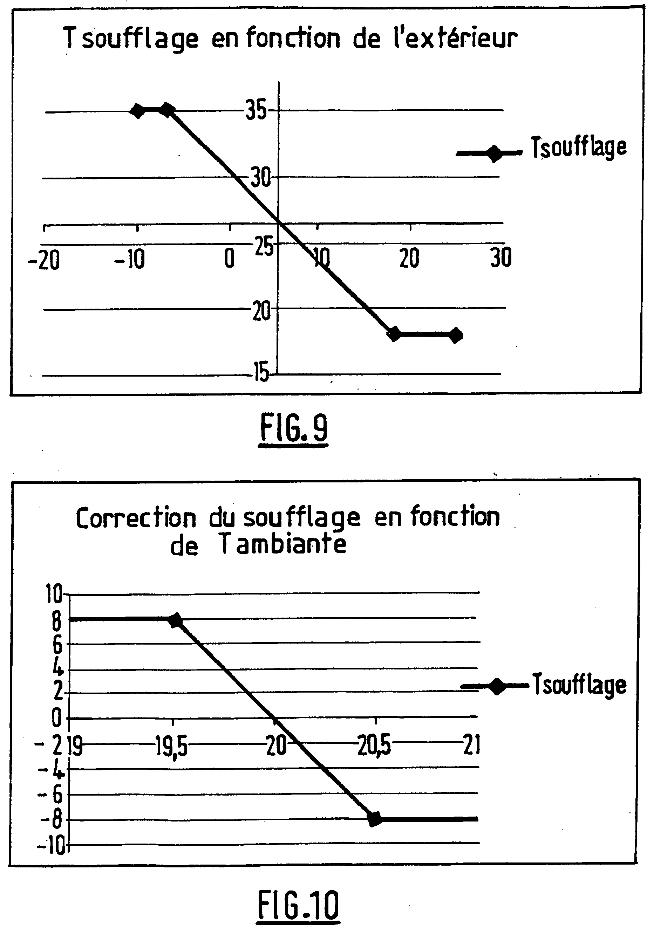

En hiver, la température de consigne de soufflage de l'air, c'est-à-dire de l'air pulsé à la sortie des moyens de chauffage, est déterminée en fonction des lois illustrées sur les figures 9 et 10.

La figure 9 illustre la température de consigne de soufflage de l'air en fonction de la température d'extérieure. À titre d'exemple, en considérant que la température extérieure est de 9,38 °C, la température de soufflage consigne est de 23,8 °C, à la lecture de la figure 9.

D'autre part, la figure 10 illustre une correction de température de consigne de soufflage en fonction de la température extérieure. Si la température d'ambiance est de 19,05 °C, la compensation d'ambiance est de + 8 K. Par conséquent, dans ce contexte, la température de soufflage en hiver sera de 23,8+8 =31,8°C.

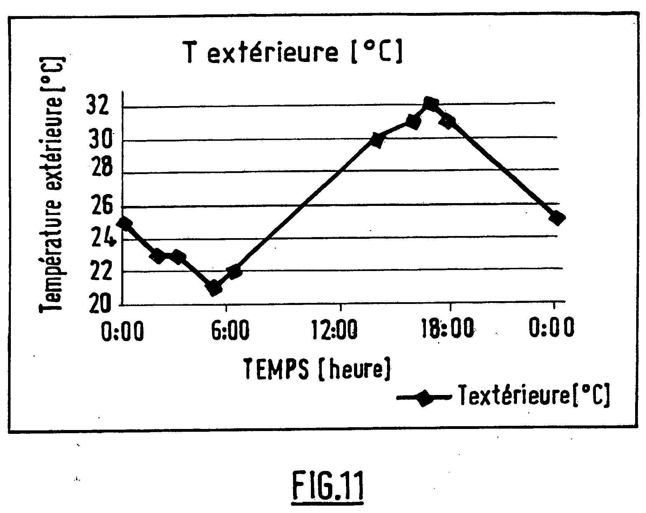

La figure 11 illustre l'évolution de la température de l'air extérieure et donc de l'air pulsée, lorsque aucun moyen de refroidissement ou de chauffage n'est utilisé.

Un bilan thermique (déperditions) du local a été réalisé et différents scénarios de mesure ont été choisis : charge interne, température de soufflage, température extérieure (pour cas été),...

| | |
|---|---|
| Charge interne hiver (occupant + luminaire + machine) | 300 W |
| Température de soufflage hiver | 31,8°C |
| Charge interne été | 300 W |
| Température de soufflage été | 25°C |
| Déperditions | 193 W/K |

Les résultats suivants ont été trouvés par rapport à des essais réalisé en été et en hiver, préalablement définis. Les puissances calorifiques et frigorifiques dépendant de la température extérieure, nous obtenons les valeurs moyennes suivantes pour les essais effectués.

| **Résultats** | **Valeurs** |
|---|---|
| Débit d'air volume | 75 m³/h |
| Nombre de tubes | 6 |
| Diamètre tube | 50 mm |
| Pas entre chaque tube (entre axe) | 400 mm |
| Température ambiante été | 24,1 °C |
| Température ambiante hiver | 19,1 °C |
| Puissance frigorifique | 27 W / m² |
| Puissance calorifique | 51 W / m² |

Pour les autres cas, nous avons également trouvé des valeurs qui sont comprises entre 5 et 150 W/m² en puissance frigorifique et entre 10 et 200 W/m² en puissance calorifique.

## Revendications

1. Elément de structure comprenant une plaque (1) et un réseau de conduites d'air (2, 3) intégrées dans la masse de ladite plaque (1), lesdites conduites (2, 3) étant, d'une part destinées à être raccordées à au moins un collecteur (4) d'alimentation en air pulsé et présentant, d'autre part, des bouches (5) de sortie d'air pour diffuser l'air dans le local (6) ; ledit élément de structure étant **caractérisé en ce que** le réseau de conduites (2, 3) comporte au moins une conduite (2) d'un premier type et une conduite (3) d'un second type, la conduite (2) de premier type présentant une conductivité thermique supérieure à celle de la conduite de second type (3).

2. Elément de structure selon la revendication 1, **caractérisé en ce que** la conduite (2) de premier type présente une conductivité thermique supérieure à 10 W.m⁻¹.K⁻¹, de préférence supérieure à 30 W.m⁻¹.K⁻¹, et **en ce que** la conduite (3) de second type présente une conductivité inférieure à 1 W.m⁻¹.K⁻¹, de préférence inférieure à 0,5 W.m⁻¹.K⁻¹.

3. Elément de structure selon la revendication 1 ou la revendication 2, **caractérisé en ce que** la conduite (2) de premier type est réalisée en acier.

4. Elément de structure selon l'une des revendications 1 à 3, **caractérisé en ce que** la conduite (3) de second type est réalisée en matière plastique rigide, du type Polychlorure de vinyle, polyéthylène réticulé ou poly butène.

5. Elément de structure selon l'une des revendications 1 à 4, **caractérisé en ce que** la plaque (1) est une dalle préfabriquée ou coulée sur place avec ou sans ferraillage.

6. Installation de régulation de la température d'un local **caractérisée en ce qu'**elle comprend un élément de structure selon l'une des revendications 1 à 5.

7. Installation selon la revendication 6, **caractérisée en ce qu'**elle comprend au moins un circuit d'amenée de l'air comportant un collecteur (4) d'alimentation en air pulsé raccordé aux conduites (2, 3), des moyens (10, 11) de chauffage et de refroidissement de l'air et des moyens (12) de ventilation de l'air.

8. Installation selon la revendication 6 ou 7, **caractérisée en ce qu'**elle comporte des moyens (7, 8) de régulation du débit d'air dans les conduites (2, 3).

9. Installation selon les revendications 7 et 8, **caractérisée en ce qu'**elle comprend une unité de régulation (9) connectée aux moyens de chauffage et de refroidissement (10, 11) et aux moyens de régulation du débit d'air dans les conduites (2, 3).

10. Installation selon la revendication 9, **caractérisée en ce qu'**elle comprend au moins une sonde de mesure de la température d'ambiance dans le local, une sonde de mesure de la température extérieure et une sonde de mesure de la température de l'air en aval des moyens (10, 11) de chauffage et/ou de refroidissement, connectées à l'unité de régulation (9).

11. Utilisation d'une installation de régulation de la température d'un local de chauffage selon l'une des revendications 6 à 10, prévoyant de :
- pulser de l'air au travers de la conduite (2) de premier type ;
- pulser de l'air au travers de la conduite (3) de second type.

12. Utilisation selon la revendication 11 d'une installation de régulation de la température d'un local de chauffage selon la revendication 8 ou 9, **caractérisée en ce que** l'on régule la température et/ou le débit de l'air pulsé.

13. Utilisation selon la revendication 12 d'une installation de régulation de la température d'un local de chauffage selon la revendication 10, **caractérisée en ce que** l'on mesure la température extérieure et la température d'ambiance dans le local et l'on régule la température et/ou le débit de l'air pulsé en fonction de la température extérieure et de la température d'ambiance.

14. Utilisation selon la revendication 11 à 13 d'une installation de régulation de la température d'un local de chauffage selon la revendication 8, **caractérisée en ce que** l'on régule de manière indépendante le débit de l'air pulsé dans les conduites de premier type et le débit de l'air pulsé dans les conduites de second type.

15. Procédé de construction d'un bâtiment comprenant la réalisation de planchers et/ou de plafonds entre les étages qui sont formés à partir d'éléments de structure selon l'une des revendications 1 à 5.

## Patentansprüche

1. Strukturelement, eine Platte (1) und ein Luftleitungnetz (2, 3) umfassend, die in die Masse der besagten Platte (1) integriert sind, wobei die besagten Leitungen (2, 3) einerseits dazu bestimmt sind, an zumindest einen Kollektor (4) zur Versorgung mit pulsierter Luft angeschlossen zu werden, und andererseits Luftauslassöffnungen (5) aufweisen, um im Raum (6) Luft zu verströmen; wobei das besagte Strukturelement **dadurch gekennzeichnet ist, dass** das Leitungsnetz (2, 3) zumindest eine Leitung (2) eines ersten Typs und eine Leitung (3) eines zweiten Typs umfasst, wobei die Leitung (2) des ersten Typs eine Wärmeleitfähigkeit größer als jene der Leitung des zweiten Typs (3) aufweist.

2. Strukturelement nach Anspruch 1, **dadurch gekennzeichnet, dass** die Leitung (2) des ersten Typs eine Wärmeleitfähigkeit von mehr als 10 W.m⁻¹.K⁻¹ aufweist, vorzugsweise von mehr als 30 W.m⁻¹.K⁻¹ und dadurch, dass die Leitung (3) des zweiten Typs eine Leitfähigkeit von unter 1 W.m⁻¹.K⁻¹, vorzugsweise von unter 0,5 W.m⁻¹.K⁻¹ aufweist.

3. Strukturelement nach Anspruch 1 oder Anspruch 2, **dadurch gekennzeichnet, dass** die Leitung (2) des ersten Typs aus Stahl gefertigt ist.

4. Strukturelement nach einem der Ansprüche 1 bis 3, **dadurch gekennzeichnet, dass** die Leitung (3) des zweiten Typs aus einem steifen Kunststoffmaterial des Typs Polyvinylchlorid, vernetztes Polyehtylen oder Polybuten gefertigt ist.

5. Strukturelement nach einem der Ansprüche 1 bis 4, **dadurch gekennzeichnet, dass** die Platte (1) eine vorgefertigte oder vor Ort gegossene Platte mit oder ohne Eisenbewehrung ist.

6. Temperaturregelungsanlage eines Raums, **dadurch gekennzeichnet, dass** sie ein Strukturelement nach einem der Ansprüche 1 bis 5 umfasst.

7. Anlage nach Anspruch 6, **dadurch gekennzeichnet, dass** sie zumindest folgende umfasst: einen Luftzuführkreis, der einen Kollektor (4) zur Versorgung mit pulsierter Luft umfasst, der mit den Leitungen (2, 3) verbunden ist, Mittel (10, 11) zum Heizen und Kühlen der Luft und Mittel (12) zur Luftzirkulation.

8. Anlage nach Anspruch 6 oder 7, **dadurch gekennzeichnet, dass** sie Mittel (7, 8) zum Regeln des Luftdurchsatzes in den Leitungen (2, 3) umfasst.

9. Anlage nach den Ansprüchen 7 und 8, **dadurch gekennzeichnet, dass** sie eine Regeleinheit (9) umfasst, die mit den Mitteln zum Heizen und zum Kühlen (10, 11) und mit den Mitteln zum Regeln des Luftdurchsatzes in den Leitungen (2, 3) verbunden ist.

10. Anlage nach Anspruch 9, **dadurch gekennzeichnet, dass** sie zumindest eine Sonde zum Messen der Umgebungstemperatur im Raum, eine Sonde zum Messen der Außentemperatur und eine Sonde zum Messen der Luft stromabwärts der Mittel (10, 11) zum Heizen und/ oder Kühlen umfasst, die mit der Regeleinheit (9) verbunden sind.

11. Nutzung einer Temperaturregelungsanlage eines zu heizenden Raums nach einem der Ansprüche 6 bis 10, die vorsieht:
- Luft durch die Leitung (2) des ersten Typs zu pulsieren;
- Luft durch die Leitung (3) des zweiten Typs zu pulsieren.

12. Nutzung nach Anspruch 11 einer Temperaturregelungsanlage eines zu heizenden Raums nach Anspruch 8 oder 9, **dadurch gekennzeichnet, dass** man die Temperatur und/oder den Durchsatz der pulsierten Luft regelt.

13. Nutzung nach Anspruch 12 einer Temperaturregelungsanlage eines zu heizenden Raums nach Anspruch 10, **dadurch gekennzeichnet, dass** man die Außentemperatur und die Umgebungstemperatur im Raum misst, und man die Temperatur und/ oder den Durchsatz der pulsierten Luft in Abhängigkeit von der Außentemperatur und der Umgebungstemperatur regelt.

14. Nutzung nach einem der Ansprüche 11 bis 13 einer Temperaturregelungsanlage eines zu heizenden Raums nach Anspruch 8, **dadurch gekennzeichnet, dass** man den Durchsatz der pulsierten Luft in den Leitungen des ersten Typs und den Durchsatz der pulsierten Luft in den Leitungen des zweiten Typs unabhängig voneinander regelt.

15. Verfahren zum Bau eines Gebäudes, die Herstellung von Fußböden und/ oder Decken zwischen den Etagen umfassend, die aus Strukturelementen nach einem der Ansprüche 1 bis 5 gebildet werden.

## Claims

1. Structure element comprising a plate (1) and a network of air pipes (2, 3) integrated into the mass of said plate (1), said pipes (2, 3) being, on the one hand intended to be connected to at least one pulsed air supply manifold (4) and having, on the other hand, air outlets (5) for diffusing the air in the room (6); said structure element being **characterised in that** the network of pipes (2, 3) comprises at least one pipe (2) of a first type and one pipe (3) of a second type, the pipe (2) of the first type having a thermal conductivity higher than a thermal conductivity of the pipe of the second type (3).

2. Structure element according to claim 1, **characterised in that** the pipe (2) of the first type has a thermal conductivity higher than 10 W.m⁻¹.K⁻¹, preferably higher than 30 W.m⁻¹.K⁻¹, and **in that** the pipe (3) of the second type has a conductivity less than 1 W.m⁻¹.K⁻¹, preferably less than 0.5 W.m⁻¹.K⁻¹.

3. Structure element according to claim 1 or claim 2, **characterised in that** the pipe (2) of the first type is made of steel.

4. Structure element according to one of claims 1 to 3, **characterised in that** the pipe (3) of the second type is made of a rigid plastic material, of the polyvinyl chloride, crosslinked polyethylene or polybutene type.

5. Structure element according to one of claims 1 to 4, **characterised in that** the plate (1) is a prefabricated or cast-on-site slab with or without iron frameworks.

6. Installation for regulating the temperature of a room **characterised in that** it comprises a structure element according to one of claims 1 to 5.

7. Installation according to claim 6, **characterised in that** it comprises at least one circuit for supplying air comprising a pulsed air supply manifold (4) connected to the pipes (2, 3), means (10, 11) for heating and for cooling the air and means (12) for ventilating the air.

8. Installation according to claim 6 or 7, **characterised in that** it comprises means (7, 8) for regulating the flow rate of air in the pipes (2, 3).

9. Installation according to claims 7 and 8, **characterised in that** it comprises a regulating unit (9) connected to the means for heating and for cooling (10, 11) and to the means for regulating the flow rate of air in the pipes (2, 3).

10. Installation according to claim 9, **characterised in that** it comprises at least one sensor for measuring the room temperature in the room, a sensor for measuring the outside temperature and a sensor for measuring the temperature of the air downstream of the means (10, 11) for heating and/or for cooling, connected to the regulating unit (9).

11. Utilisation of an installation for regulating the heating temperature of a room according to one of claims 6 to 10, providing to:
- pulse the air through the pipe (2) of the first type;
- pulse the air through the pipe (3) of the second type.

12. Utilisation according to claim 11 of an installation for regulating the heating temperature of a room according to claim 8 or 9, **characterised in that** the temperature and/or the flow rate of the pulsed air are regulated.

13. Utilisation according to claim 12 of an installation for regulating the heating temperature of a room according to claim 10, **characterised in that** the outside temperature and the room temperature in the room are measured and the temperature and/or the flow rate of the pulsed air are regulated according to the outside temperature and the room temperature.

14. Utilisation according to one of claims 11 to 13 of an installation for regulating the heating temperature of a room according to claim 8, **characterised in that** the flow rate of the pulsed air in the pipes of the first type and the flow rate of the pulsed air in the pipes of the second type are regulated independently.

15. Method for constructing a building comprising the realisation of floors and/or ceilings between the floors which are formed using structure elements according to one of claims 1 to 5.
